# EUROPÄISCHE PATENTSCHRIFT

(11) **EP 1 574 756 B1**
(45) Veröffentlichungstag und Bekanntmachung des Hinweises auf die Patenterteilung: **18.04.2007**
(21) Anmeldenummer: 05004789.3
(22) Anmeldetag: 04.03.2005
(51) Int. Cl.: F16H 37/06, F16H 61/44, F16H 47/02, A01D 90/14, A01D 90/10

(54) **Antrieb mit einem Getriebe**
Drive with transmission
Entrainement avec transmission

(30) Priorität: 12.03.2004 DE 102004012623; 09.07.2004 DE 102004033574
(43) Veröffentlichungstag der Anmeldung: 14.09.2005
(73) Patentinhaber: Röchling Getriebe OHG, 49716 Meppen (DE)
(72) Erfinder: Pleus, Karlheinz, 49779 Oberlangen (DE); Seggering, Manfred, 49744 Geeste-Dalum (DE)
(74) Vertreter: Engelmann, Kristiana

(56) Entgegenhaltungen:
- EP-A- 0 559 003
- EP-A- 0 788 731
- EP-A- 1 270 301
- DE-A1- 1 530 624
- DE-A1- 3 409 561
- DE-A1- 4 203 877
- DE-A1- 4 235 728
- US-A- 3 421 389
- US-A- 3 602 068
- US-A- 4 489 625
- US-A- 6 059 534
- US-A1- 2003 192 400

## Beschreibung

Die Erfindung betrifft einen Antrieb für einen Kratzboden gemäß dem Oberbegriff des Anspruchs 1, wie er aus der US-A-6059534 bekannt geworden ist.

Die Antriebe moderner, landwirtschaftlich nutzbarer Vorrichtungen, beispielsweise für Kratzböden von Ladewagen oder Streuern, sollen verschiedene Antriebszustände für die Vorrichtung ermöglichen. Hierfür bekannte Antriebe mit einem Getriebe verwenden zum Beispiel Hydraulikdoppelmotoren, die unterschiedliche Drehmomente übertragen können. Solche Motoren sind allerdings großvolumig, konstruktiv aufwendig und entsprechend teuer.

Es ist Aufgabe der vorliegenden Erfindung, einen Antrieb mit einem Getriebe insbesondere für landwirtschaftliche Maschinen, vorzugsweise für Kratzböden, zu schaffen, das flexibel einsetzbar ist und die Nachteile des Standes der Technik vermeidet.

Die Aufgabe wird gelöst durch einen Antrieb mit einem Getriebe nach dem Anspruch 1.

Vorzugsweise handelt es sich bei den Motoren um Hydraulikmotoren, die besonders günstig sind und die üblicherweise bei landwirtschaftlich nutzbaren Vorrichtungen bzw. Maschinen vorhandenen Hydraulikanschlüsse nutzen können.

Einer weiteren Ausführungsform der Erfindung gereicht es zum Vorteil, wenn die Steuereinrichtung zusätzlich eine Schalteinheit aufweist, die von einem Schlepperfahrzeug oder von einem Führerstand der landwirtschaftlich nutzbaren Vorrichtung aus betätigt werden kann. Dieses vereinfacht die Bedienung des erfindungsgemäßen Antriebs mit einem Getriebe bzw. der damit verbundenen landwirtschaftlich nutzbaren Vorrichtung erheblich.

Zum Abfangen des im Betrieb auftretenden Drehmoments weist ein weiterer erfindungsgemäßer Antriebs mit einem Getriebe für einen auf einem Ladewagen oder Streuer befindlichen Kratzboden eine Drehmomentstütze auf, die an einem entsprechend ausgebildetem Gegenstück, beispielsweise einem Steg der Ladewagenwand, befestigt oder unbefestigt anliegt. Hierdurch können die Halterungen des Getriebes vereinfacht werden, da das Getriebe durch die Verbindung Kratzbodenwelle-Abtriebswelle und die Drehmomentstütze hinreichend festlegbar ist.

Weitere Vorteile und Einzelheiten der Erfindung ergeben sich aus den schematisch dargestellten Ausführungsbeispielen in den Figuren. Es zeigen:
- Figur 1: Ein Ausführungsbeispiel eines erfindungsgemäßen Kratzbodenantriebes mit einem Getriebe,
- Figur 2: einen Schnitt durch den Gegenstand nach Figur 1 entlang der Linie ABC,
- Figur 3: den Gegenstand nach Figur 1 in einer Seitenansicht ohne Motor,
- Figur 4: ein weiteres Ausführungsbeispiel eines erfindungsgemäßen Kratzbodenantriebes mit einem Getriebe,
- Figur 5: einen Schnitt durch den Gegenstand nach Figur 4 entlang der Linie ABC,
- Figur 6: ein weiteres Ausführungsbeispiel eines erfindungsgemäßen Kratzbodengetriebes,
- Figur 7: einen Teilschnitt entlang VII-VII nach Figur 6,
- Figur 8: einen Hydraulikschaltplan zur Ansteuerung von zwei Motoren eines erfindungsgemäßen Kratzbodengetriebes,
- Figur 9: den Gegenstand nach Figur 8 in einer weiteren Schaltstellung.

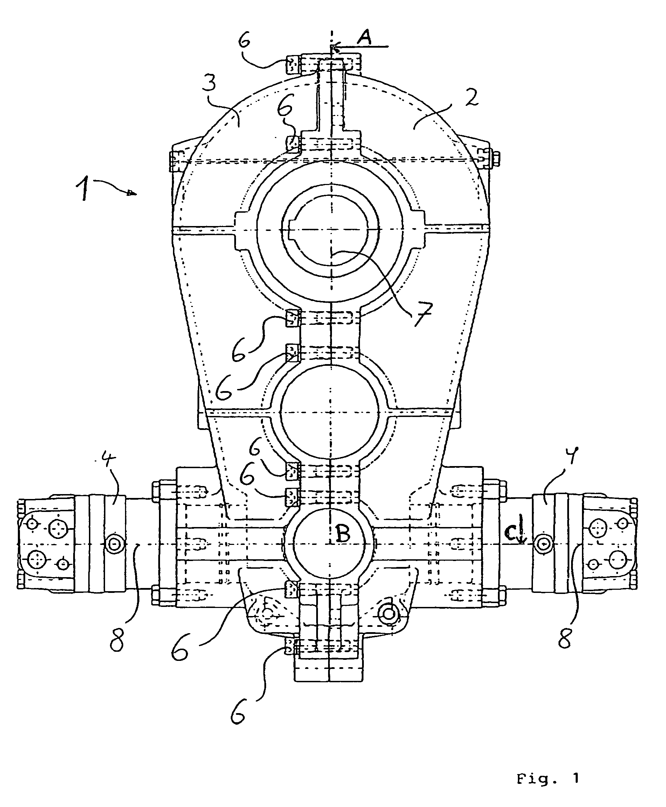

Ein erfindungsgemäßer Antrieb mit einem Getriebe weist ein Getriebegehäuse 1 auf, welches aus zwei im wesentlichen identischen Teilen 2 und 3 besteht. In einem in der Figurenebene der Figur 1 unteren Teil des Getriebes sind zwei Hydraulikmotoren 4 angeflanscht, die über eine nicht näher dargestellte Steuereinrichtung gekoppelt sind.

Die beiden Gehäusehälften 2 und 3 sind mit einer Mehrzahl von Befestigungsmitteln 6, beispielsweise Schrauben, aneinander befestigt. Eine Getriebelängsachse 7 schneidet die Drehachsen der bei diesem Ausführungsbeispiel vorhandenen insgesamt drei Wellen des Getriebes. Die symmetrische Ausbildung der Getriebegehäusehälften 2 und 3 führt zu einer vereinfachten, kostengünstigen Herstellung des Getriebes.

In dem Ausführungsbeispiel nach Figur 1 stehen die Längsachsen 8 der Hydraulikmotoren 4 senkrecht zu der Getriebelängsachse 7, d.h. sie bilden einen Winkel von 90° mit der Getriebelängsachse 7 aus. Erfindungsgemäß können die Längsachsen 8 der Hydraulikmotoren 4 mit der Getriebelängsachse 7 einen Winkel zwischen 35° und 145° einnehmen, der je nach Anforderungen an das Getriebe eine optimale Flexibilität insbesondere für die Anbringung der nicht dargestellten Versorgungsleitungen der Motoren 4 mit sich bringt.

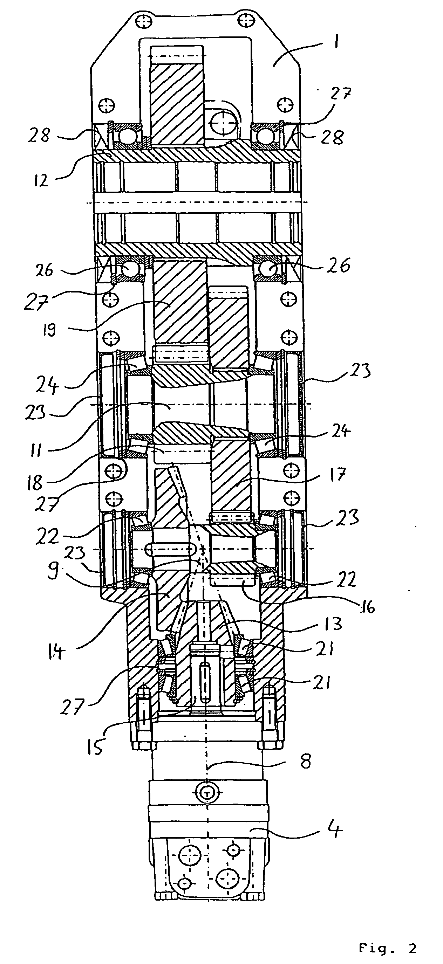

Der Schnitt entlang der Linie ABC (Figur 2) verdeutlicht die Anordnung von Eingangswelle 9, Getriebewelle 11 sowie einer Abtriebswelle 12. Die Hydraulikmotoren 4 treiben mit ihren jeweiligen Zahnrädern 13, die bei den Ausführungsformen der Fig. 1 bis 5 als Kegelritzelwellen 13 ausgebildet sind, ein auf der Eingangswelle 9 befindliches Kegelrad 14 an, welches drehfest mit der Eingangswelle 9 verbunden ist. Die Kegelritzelwellen 13 selbst bilden jeweils mit einer Motorwelle 15 die Antriebswellen der Hydraulikmotoren 4 aus.

Ein Teil der Eingangswelle 9 ist zur Ausbildung eines Stirnrades 16 mit Zähnen versehen und kämmt mit einem Stirnrad 17 der Getriebewelle 11. Anstatt einen Teil der Eingangswelle 9 als Stirnrad vorzusehen, liegt es auch im Rahmen der Erfindung, auf der Welle ein weiteres, eigenes Stirnrad anzubringen, welches dann drehfest mit der Eingangswelle 9 verbunden ist. Ebenso ist ein Teil der Getriebewelle 11 als Stirnrad 18 ausgebildet, das mit einem Stirnrad 19 der als Hohlwelle ausgebildeten Abtriebswelle 12 kämmt.

Aufgrund der Verwendung der Kegelräder 13 und 14, der Hydraulikmotoren 4 und der Eingangswelle 9 baut das erfindungsgemäße Getriebe sehr flach. So sind die Motoren 4 in etwa in der Ebene der Stirnräder 16 bis 19 angeordnet und der erfindungsgemäße Antrieb mit einem Getriebe kann beispielsweise seitlich außen oberhalb der Räder eines einen Kratzboden aufweisenden Ladewagens angebracht werden, ohne die maximale Gesamtbreite des Fahrzeugs zu erhöhen.

Die Kegelritzelwellen 13 der Hydraulikmotoren 4 sind mit Hilfe von Lagern 21 im Getriebegehäuse 1 gelagert. Die Eingangswelle 9 befindet sich komplett innerhalb des Getriebegehäuses 1 und ist ebenfalls in Lagern 22 gelagert. Der Bereich der Eingangswelle 9 ist gegenüber dem Getriebeaußenraum mit Verschlußkappen 23 abgedichtet, die sich auch beidseits der ebenfalls komplett im Getriebegehäuse 1 befindlichen Getriebewelle 11 befinden. Auch diese Getriebewelle 11 ist mit Lagern 24 drehbar im Getriebegehäuse 1 gelagert. Eine Vielzahl von nicht durchgängig bezifferten Sicherungsringen 27 legt die Lager 21, 22, 24, sowie Lager 26 der Abtriebswelle 12 im Getriebegehäuse 1 fest und sichert damit gleichzeitig die Getriebewellen 9, 11 und 12 sowie die Kegelritzelwelle 13.

Um eine Weiterleitung des Drehmomentes auf den Kratzboden zu ermöglichen, befindet sich die Abtriebswelle 12 nicht komplett innerhalb des Getriebegehäuses 1. In diesem Bereich ist das Getriebe mit Schleifdichtungen 28 versehen. Sowohl die Dimensionen der Wellen, deren Anzahl, die Module der Stirnritzel und die Abstände der Wellen können wie die übrigen Komponenten des Getriebes je nach Anforderung, die an das Getriebe gestellt werden, gewählt werden.

Jeweils ein bei der dargestellten Ausführungsform als Vier-Augen-Flansch 29 ausgebildeter Befestigungsbereich dient der Festlegung der Motoren 4 an dem Getriebegehäuse 1, womit die Motoren 4 auch ein- oder mehrfach um jeweils 90° um ihre Längsachsen 8 gedreht an das Getriebegehäuse 1 angesetzt werden können. Dies ist von Vorteil, wenn beispielsweise Druckleitungen des Hydraulikmotors 4 in einer gedrehten Anordnung des Motors 4 besser angebracht werden können.

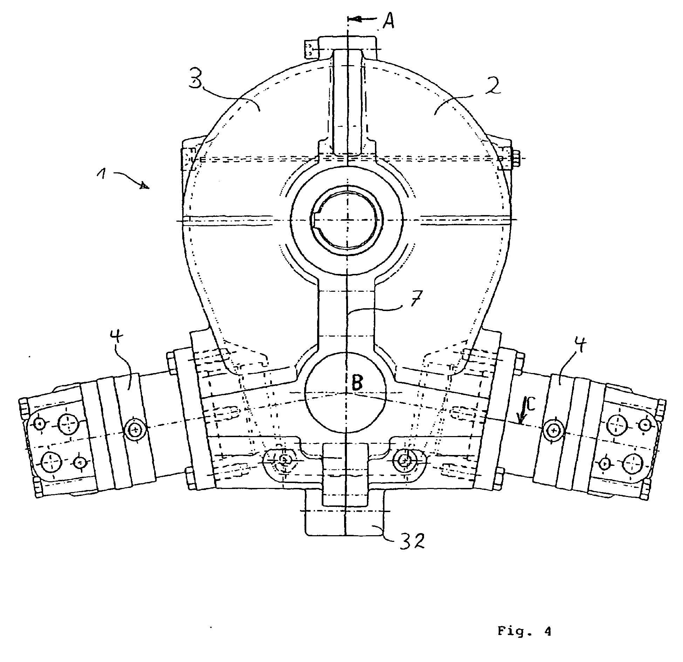

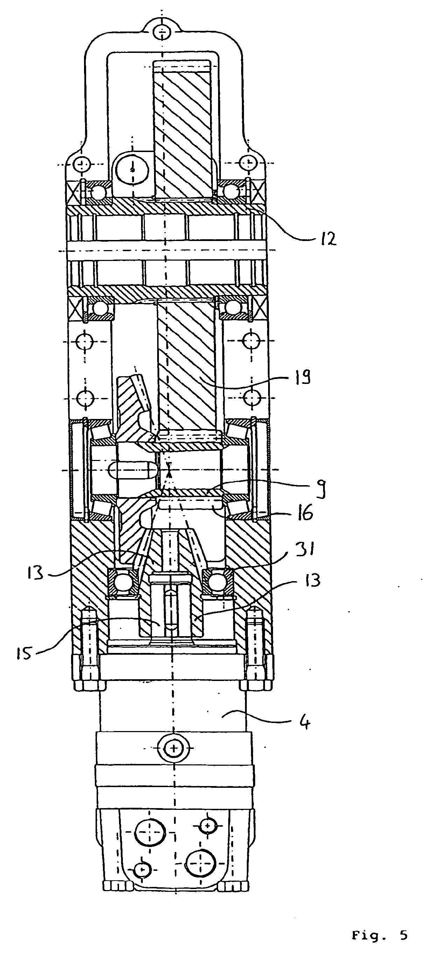

Ein in Figur 4 und 5 dargestelltes weiteres Ausführungsbeispiel eines erfindungsgemäßen Antriebs mit einem Getriebe zeigt eine geänderte Anordnung der Hydraulikmotoren 4, die nicht rechtwinklig zur Getriebelängsachse 7 an das Gehäuse 1 angeflanscht sind. Das vorliegende Getriebe baut insbesondere aufgrund der Verwendung von lediglich zwei Wellen, einer Eingangswelle 9 und einer Abtriebswelle 12 erheblich kleiner als das in den bisherigen Figuren beschriebene. Entsprechend wird hier von einem auf der Welle 9 befindlichen oder in diese eingearbeiteten Stirnrad 16 über ein Stirnrad 19 direkt auf die Abtriebswelle 12 eingegriffen. Außerdem unterscheidet sich das erfindungsgemäße Getriebe gemäß der Figuren 4 und 5 von den bisher beschriebenen durch die Lagerung der Kegelritzelwellen 13 der Hydraulikmotoren 4. Ersichtlich ist die Kegelritzelwelle 13 nur mit einem Lager 31 direkt in dem Getriebegehäuse 1 gelagert. Die notwendige zweite Lagerung befindet sich innerhalb des Motors 4, so daß die Kegelritzelwellen 13 der Motoren 4 je einerseits in Ihrem Motorengehäuse und andererseits im Getriebegehäuse 1 gelagert sind. Neben den unterschiedlichen Übersetzungen und den geringeren Dimensionen ist der prinzipielle Aufbau dieses Getriebes allerdings identisch zu dem der Figuren 1 bis 3.

An seinem unteren Ende (Figur 4) weist das Getriebegehäuse 1 eine Drehmomentstütze 32 auf, die mit einem korrespondierend ausgebildeten Teil der landwirtschaftlich nutzbaren Vorrichtung wechselwirkt, um das auf das Getriebe wirkende Drehmoment abzustützen. Hierdurch vereinfacht sich die Anbringung des erfindungsgemäßen Getriebes an der Vorrichtung, da auf weitere Halterungen neben der Verbindung mit der von der Abtriebswelle 12 angetriebenen Welle verzichtet werden kann.

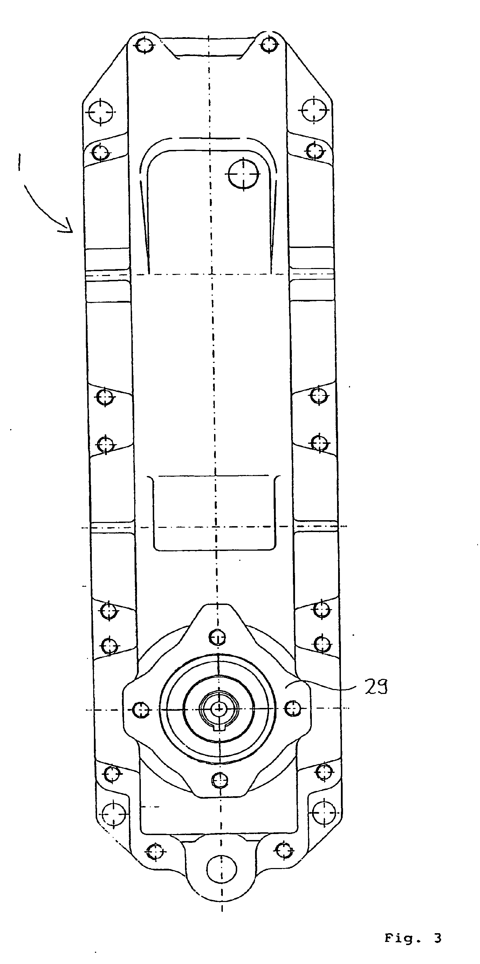

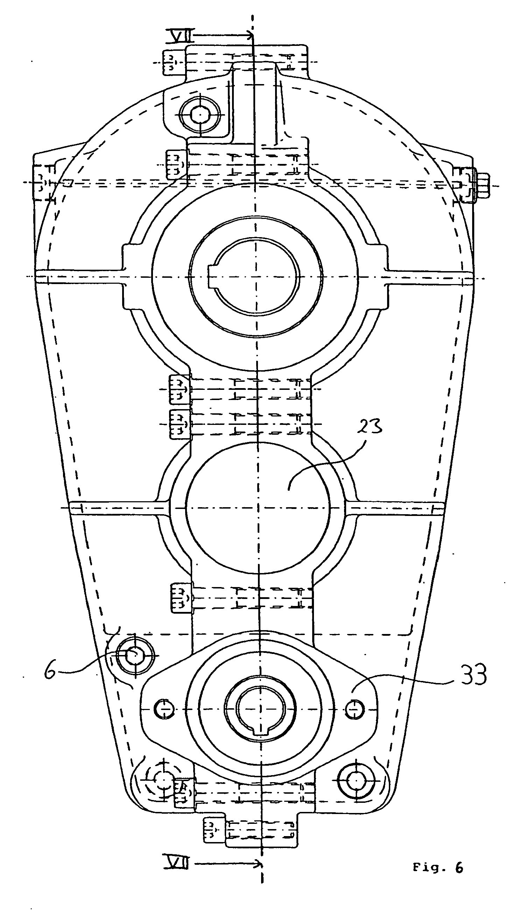

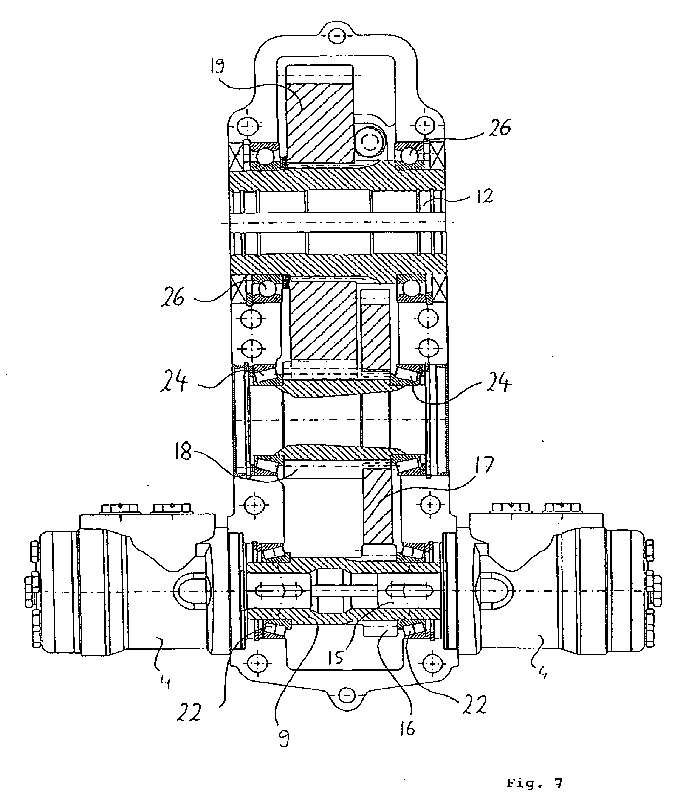

Bei einer weiteren vorteilhaften Ausbildung der Erfindung gemäß Figur 6 und 7 greifen die Antriebswellen der Hydraulikmotoren 4 beidseitig direkt vorzugsweise formschlüssig in die Eingangswelle 9 ein. Entsprechend stehen die Motoren 4 senkrecht auf den durch die Stirnräder 16, 17, 18 gebildeten Flächen. Diese Ausführungsform baut breiter als die bisher beschriebenen Ausführungsbeispiele und wird daher vorzugsweise unterhalb des Kratzbodens einer landwirtschaftlichen Vorrichtung und mit seiner Abtriebswelle 12 in etwa mittig auf der Kratzbodenantriebswelle angeordnet. Auf Ausführungswunsch sind die Hydraulikmotoren 4 dort nicht mit Vier-Augen-Flanschen sondern mit Zwei-Augen-Flanschen 33 an das Getriebegehäuse 1 angebracht (Fig. 7). Die Hydraulikmotoren können vor ihrer Festlegung im Gegensatz zu den um 90° drehbaren Motoren des Ausführungsbeispiels nach Fig. 3 insoweit nur um jeweils 180° gedreht werden.

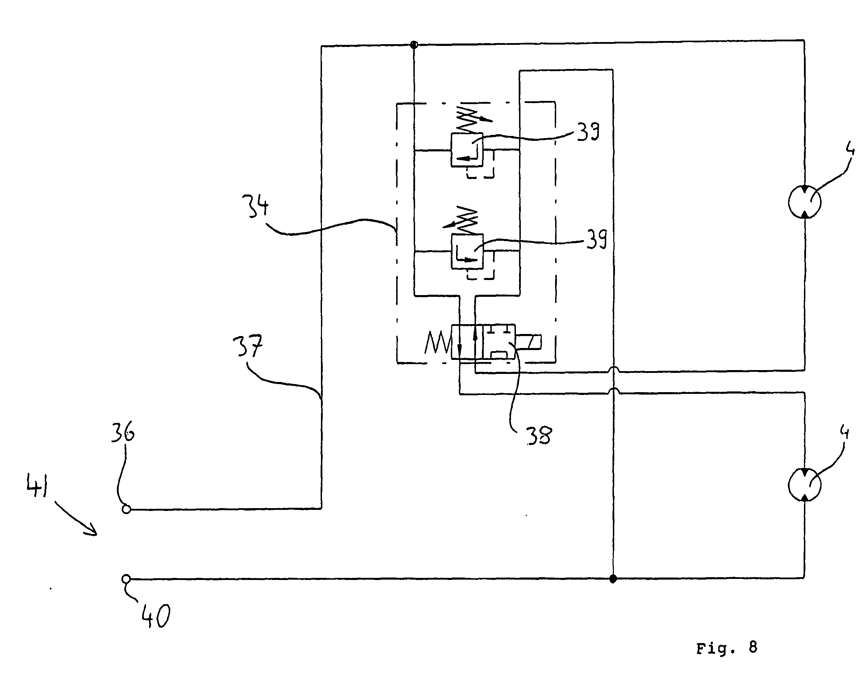

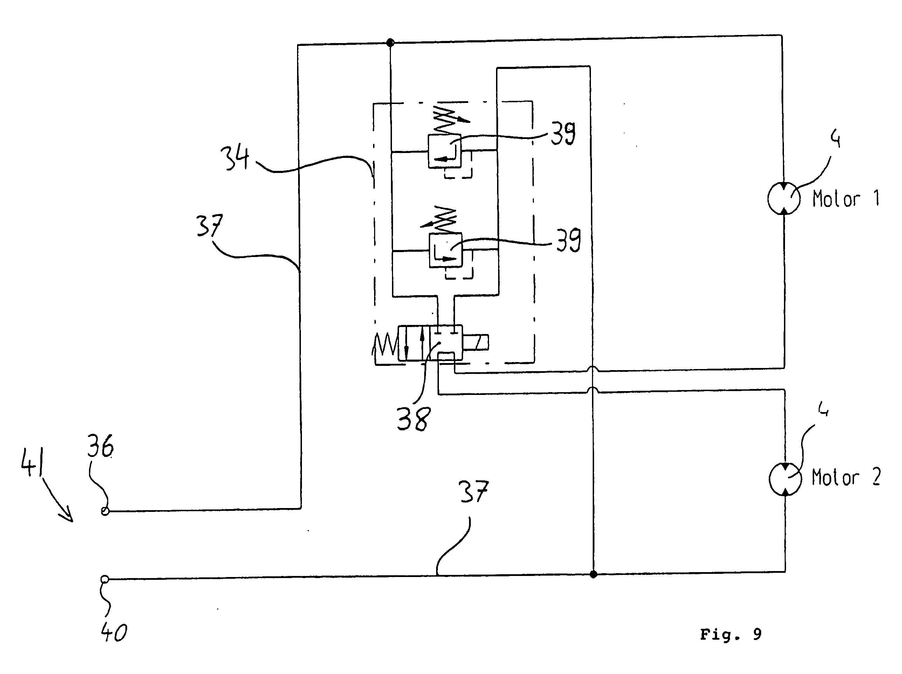

Die Steuerung der Hydraulikmotoren 4 mit Hilfe einer Steuereinrichtung 34 ist anhand der Hydraulikschaltpläne der Figuren 8 und 9 dargestellt. Von einem Zulauf 36 wird ein Druckmedium über allgemein als 37 bezeichnete Druckleitungen geleitet. Ein Hydraulikmotor 4 wird über eine Druckleitung 37 direkt von dem Zulauf 36 mit einem Druckmedium, beispielsweise Hydrauliköl, versorgt, während der zweite Hydraulikmotor 4 in Abhängigkeit von der Schaltstellung eines Zweiwegeventils 38 der Steuereinrichtung 34 entweder dem ersten Hydraulikmotor 4 nachgeschaltet oder zu diesem parallel geschaltet ist. Druckventile 39 dienen der Regelung des an den Motoren 4 anliegenden Druckes.

In der in Figur 8 gezeigten Stellung sind die beiden Hydraulikmotoren 4 parallel geschaltet. Hierdurch liegt im Vergleich zur in Figur 9 dargestellten Schaltstellung, in der die Hydraulikmotoren 4 in Reihe geschaltet sind, eine niedrige Drehzahl mit einem hohen Drehmoment an der Eingangswelle des erfindungsgemäßen Getriebes an. Konstantes Fördervolumen und konstante Fördergeschwindigkeit des Druckmediums vorausgesetzt, läuft der in Figur 8 und 9 obere der beiden Hydraulikmotoren 4 in der Reihen-Schaltstellung (Fig. 9) mit etwa doppelt so hoher Drehzahl wie bei einer Parallelschaltstellung gemäß Figur 8, während der zweite, nachgeschaltete Hydraulikmotor 4 leer mitläuft. In der Schaltstellung nach Figur 8 liegt hingegen an der Eingangswelle 9 des Getriebes ein höheres Drehmoment mit dafür niedrigerer Drehzahl an. Nach dem Fluß durch die beiden Hydraulikmotoren 4 wird das Druckmedium in einen Rücklauf 40 geleitet, der zusammen mit dem Zulauf 36 Teil der Versorgungsquelle 41 ist.

Durch die Verwendung einfacher Hydraulikmotoren 4, die gegenüber sonst zu verwendender Hydraulikdoppelmotoren oder Getrieben mit Schaltungen deutlich günstiger sind, sind die Herstellungskosten für die erfindungsgemäßen Getriebe verringert. Da zudem das Getriebe keine in das Getriebegehäuse 1 hinein oder aus diesem herausführende Schaltvorrichtung aufweist, läßt es sich außerordentlich klein und kompakt sowie weniger verschleißanfällig als Getriebe mit Schaltvorrichtungen herstellen.

Es liegt schließlich im Rahmen der Erfindung, mehr als zwei Motoren an dem Getriebe vorzusehen und mittels einer dann komplexeren Steuereinrichtung zu koppeln, um so den Einsatzbereich des erfindungsgemäßen Antriebs mit einem Getriebe durch Besitstellung zusätzlicher Schaltstufen weiter zu erhöhen. Dabei können nicht nur sämtliche Motoren parallel oder in Reihe geschaltet werden, sondern es sind auch zusammengesetzte Schaltungen möglich, bei denen beispielsweise zwei Motoren in Reihe und gemeinsam zu einem weiteren parallel geschaltet sind.

## Patentansprüche

1. Antrieb für einen Kratzboden mit einem Getriebe mit zwei Motor (4, 4) und in einem Getriebegehäuse (1) angeordneten Eingangs- und Abtriebswellen (9, 12), wobei ein über eine Versorgungsquelle (41) angetriebener Motor (4) über die Eingangswelle (9) und Zahnräder (13, 14, 16, 17,18,19) die Abtriebswelle (12) antreibt, mit einem Anschluß am Getriebe für zumindest einen weiteren Motor (4) zur antriebsmäßigen Verbindung mit der Eingangswelle (9), wobei der weitere Motor (4) von derselben Versorgungsquelle (41) angetrieben und mit dem ersten Motor (4) über eine Steuereinrichtung (34) gekoppelt ist,
**dadurch gekennzeichnet, daß** die Motoren (4) durch die Steuereinrichtung (34) parallel oder in Reihe schaltbar sind, wobei die Steuereinrichtung (34) eine Reihen-Schaltstellung aufweist, in der ein Motor (4) das Drehmoment auf die Eingangswelle (9) überträgt, während der weitere Motor (4) leer mitläuft, sowie eine Parallel-Schaltstellung, in der beide Motoren (4) mit im Vergleich zur ersten Schaltstellung in etwa halber Drehzahl die Eingangswelle (9) antreiben.

2. Antrieb nach Anspruch 1, **dadurch gekennzeichnet, daß** die Längsachse (8) der Motoren (4) mit einer Getriebelängsachse (7) einen Winkel zwischen 35° und 145° ausbildet.

3. Antrieb nach einem der Ansprüche 1 oder 2, **dadurch gekennzeichnet, daß** die Motoren (4) Hydraulikmotoren sind.

4. Antrieb nach einem der Ansprüche 1 bis 3, **dadurch gekennzeichnet, daß** die Antriebswellen der Motoren (4) gleichzeitig eine Lagerstelle für Zahnräder (13) der Motoren (4) ausbilden.

5. Antrieb nach einem der Ansprüche 1 bis 4, **dadurch gekennzeichnet, daß** die Steuereinrichtung (34) eine Schalteinheit aufweist, die von einem Schlepperfahrzeug aus betätigbar ist.

6. Antrieb nach einem der Ansprüche 1 bis 5, **dadurch gekennzeichnet, daß** Motoren (4) und Getriebegehäuse (1) korrespondierend ausgebildete Befestigungsbereiche aufweisen, von denen zumindest einer dergestalt ausgebildet ist, daß der Motor (4) um seine Längsachse (8) gedreht in zumindest zwei Positionen an dem Getriebegehäuse (1) befestigbar ist.

7. Antrieb nach einem der Ansprüche 1 bis 6, **dadurch gekennzeichnet, daß** das Getriebegehäuse (1) zwei im wesentlichen identische Gehäusehälften (2, 3) aufweist.

8. Antrieb nach einem der Ansprüche 1 bis 7, **dadurch gekennzeichnet, daß** die Motoren (4) direkt oder indirekt über dasselbe Zahnrad (14) der Eingangswelle (9) auf diese eingreifen.

9. Antrieb nach Anspruch 8, **dadurch gekennzeichnet, daß** die Motoren (4) mit der Eingangswelle (9) des Getriebes über zumindest einen Kegelradsatz (13, 14) verbunden sind.

10. Antrieb nach Anspruch 8, **dadurch gekennzeichnet, daß** die Antriebswellen der Motoren (4) in die Eingangswelle (9) eingreifen.

11. Antrieb nach einem der Ansprüche 1 bis 10, **dadurch gekennzeichnet, daß** es eine Drehmomentstütze (32) für das auf das Getriebe wirkende Drehmoment aufweist.

12. Kratzboden, **gekennzeichnet durch** einen Antrieb nach einem der vorherigen Ansprüche.

## Claims

1. Drive for a moving-floor conveyor, having a gearbox having two motors (4, 4) and input and output shafts (9, 12) arranged in a gearbox housing (1), with a motor (4) which is driven via a supply source (41) driving the output shaft (12) via the input shaft (9) and gears (13, 14, 16, 17, 18, 19), and having a connection to the gearbox for at least one further motor (4) to be drivingly connected to the input shaft (9), the further motor (4) being driven by the same supply source (41) and being coupled to the first motor (4) via a control means (34), **characterised in that** the motors (4) can be connected in parallel or in series by the control means (34), the control means (34) having a series switched position in which one motor (4) transmits the torque to the input shaft (9) while the further motor (4) runs with it, off-load, and a parallel switched position in which both motors (4) drive the input shaft (9), at a speed which is approximately half the speed in the first switched position.

2. Drive according to claim 1, **characterised in that** the longitudinal axis (8) of the motors (4) makes an angle of between 35° and 145° with a longitudinal axis (7) of the gearbox.

3. Drive according to either of claims 1 and 2, **characterised in that** the motors (4) are hydraulic motors.

4. Drive according to one of claims 1 to 3, **characterised in that** the drive shafts of the motors (4) form, at the same time, a mounting point for gears (13) of the motors (4).

5. Drive according to one of claims 1 to 4, **characterised in that** the control means (34) has a switching unit which can be actuated from a towing vehicle.

6. Drive according to one of claims 1 to 5, **characterised in that** the motors (4) and gearbox housing (1) have correspondingly formed regions for fastening of which at least one is so designed that the motor (4) can be fastened to the gearbox housing (1) in at least two positions in which it is rotated on its longitudinal axis (8).

7. Drive according to one of claims 1 to 6, **characterised in that** the gearbox housing (1) has two substantially identical housing halves (2, 3).

8. Drive according to one of claims 1 to 7, **characterised in that** the motors (4) engage the input shaft (9), directly or indirectly, via the same gear (14) belonging to the input shaft (9).

9. Drive according to claim 8, **characterised in that** the motors (4) are connected to the input shaft (9) of the gearbox via at least one set of bevel gears (13, 14).

10. Drive according to claim 8, **characterised in that** the drive shafts of the motors (4) engage with the input shaft (9).

11. Drive according to one of claims 1 to 10, **characterised in that** it has a torque support (32) for the torque acting on the gearbox.

12. Moving-floor conveyor, **characterised by** a drive according to one of the foregoing claims.

## Revendications

1. Système d'entraînement pour un fond à raclettes, équipé d'une transmission munie de deux moteurs (4, 4) et d'arbres d'entrée et de sortie (9, 12) logés dans un carter de transmission (1), un moteur (4) mû à partir d'une source d'alimentation (41) entraînant l'arbre de sortie (12) par l'intermédiaire de l'arbre d'entrée (9) et d'engrenages (13, 14, 16, 17, 18, 19), comprenant un dispositif de raccordement d'au moins un moteur supplémentaire (4) sur la transmission, permettant d'établir une liaison d'entraînement avec l'arbre d'entrée (9), le moteur supplémentaire (4) étant mû à partir de la même source d'alimentation (41) et étant couplé au premier moteur (4) par l'intermédiaire d'un dispositif de commande (34),
**caractérisé en ce que** les moteurs (4) peuvent être mis en parallèle ou en série l'un avec l'autre via le dispositif de commande (34), le dispositif de commande (34) ayant une position de commutation en série, dans laquelle l'un des moteurs (4) transmet le couple de rotation à l'arbre d'entrée (9) pendant que le moteur supplémentaire (4) est entraîné à vide, ainsi qu'une position de commutation parallèle, dans laquelle les deux moteurs (4) entraînent l'arbre d'entrée (9) conjointement à une vitesse de rotation à peu près réduite de moitié par rapport à celle de la première position de commutation.

2. Système d'entraînement selon la revendication 1, **caractérisé en ce que** l'axe longitudinal (8) des moteurs (4) forme, avec un axe longitudinal (7) de la transmission, un angle compris entre 35° et 145°.

3. Système d'entraînement selon l'une des revendications 1 ou 2, **caractérisé en ce que** les moteurs (4) sont des moteurs hydrauliques.

4. Système d'entraînement selon l'une des revendications 1 à 3, **caractérisé en ce que** les arbres d'entraînement des moteurs (4) forment en même temps un palier pour des engrenages (13) des moteurs (4).

5. Système d'entraînement selon l'une des revendications 1 à 4, **caractérisé en ce que** le dispositif de commande (34) comporte une unité de commutation qui peut être actionnée depuis un véhicule tracteur.

6. Système d'entraînement selon l'une des revendications 1 à 5, **caractérisé en ce que** les moteurs (4) et le carter de transmission (1) présentent des parties de fixation configurées de façon complémentaire, dont une au moins est configurée de manière telle que le moteur (4) puisse être fixé sur le carter de transmission (1) dans au moins deux positions de rotation autour de son axe longitudinal.

7. Système d'entraînement selon l'une des revendications 1 à 6, **caractérisé en ce que** le carter de transmission (1) comporte deux demi-carters (2, 3) sensiblement identiques.

8. Système d'entraînement selon l'une des revendications 1 à 7, **caractérisé en ce que** les moteurs (4) sont en prise avec l'arbre d'entrée (9), soit directement, soit indirectement par l'intermédiaire de la même roue dentée (14).

9. Système d'entraînement selon la revendication 8, **caractérisé en ce que** le moteurs (4) sont reliés à l'arbre d'entrée (9) de la transmission par l'intermédiaire d'au moins un couple conique (13, 14).

10. Système d'entraînement selon la revendication 8, **caractérisé en ce que** les arbres d'entraînement des moteurs (4) s'engagent dans l'arbre d'entrée (9).

11. Système d'entraînement selon l'une des revendications 1 à 10, **caractérisé en ce qu'**il comporte un support de couple (32) supportant le couple de rotation qui agit sur la transmission.

12. Fond à raclettes, **caractérisé par** un système d'entraînement selon l'une des revendications précédentes.
